(19) Europäisches Patentamt / European Patent Office / Office européen des brevets

(11) **EP 3 962 218 B1**

(12) **EUROPEAN PATENT SPECIFICATION**

(45) Date of publication and mention
of the grant of the patent:
**24.12.2025 Bulletin 2025/52**

(21) Application number: **20193283.7**

(22) Date of filing: **28.08.2020**

(51) International Patent Classification (IPC):
*H04W 72/12* *(2023.01)*

(52) Cooperative Patent Classification (CPC):
**H04W 72/543**

(54) **METHOD, APPARATUS, AND USE THEREOF FOR RADIO COMMUNICATION**

VERFAHREN, VORRICHTUNG UND VERWENDUNG DAVON ZUR FUNKKOMMUNIKATION

PROCÉDÉ, APPAREIL ET UTILISATION ASSOCIÉE POUR COMMUNICATION RADIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.03.2022 Bulletin 2022/09**

(73) Proprietor: **Robert Bosch GmbH
70442 Stuttgart (DE)**

(72) Inventor: **Ginthoer, David Osamu
71229 Leonberg (DE)**

(56) References cited:
**WO-A1-2006/025701    KR-A- 20200 011 245**

## Description

State of the art

The 5G communication standard supports several classes of user services, for example the groupings in Ultra-Reliable and Low-Latency Communication URLLC and enhanced Mobile Broadband eMBB. Various mechanisms are used to meet the corresponding application requirements of users. Transmit Time Intervals TTIs allow to meet different latency requirements.

KR 20200011245 A discloses a method for coexistence of enhanced mobile broadband and ultra-reliable and low latency communication in a 5G network. The method comprises a first resource block allocation step of performing RB allocation for eMBB user equipments at a starting position of a current time slot, based on RB allocation of uRLLC UEs of a previous time slot. The method further comprises a second RB allocation step of performing RB allocation for the uRLLC UEs in minislot m of the current time slot, based on latency requirements, reliability requirements, and RBs for the eMBB UEs. Accordingly, it is possible to satisfy various requirements in a 5G network, provide various services, and increase spectrum efficiency.

Disclosure of the invention

Present invention is defined by the appended claims. The following aspects and implementation clauses in this section are provided for a better understanding of the invention which is solely defined by the appended claims. According to a first aspect of the description, there is provided a method for operating an apparatus of a radio communications network according to claim 1. The plurality of traffic characteristics characterizing different traffic flows may comprise cyclic traffic flows.

In the case of deterministic and cyclic data exchange, the demand for radio resources and the time of this demand is known from the traffic characteristics. Accordingly, it is possible to allocate the radio resources within the allowed tolerances of the users associated with the traffic flow on a scheduling time unit basis in order to increase resource efficiency.

In wireless transmission systems with very short TTIs and user mobility at moderate speeds, the transmission channel and thus the data rate per user remains approximately constant within the scheduling time unit, for example within a slot. Therefore, scheduling within the scheduling time unit reduced scheduling complexity and increases scheduling reliability by the short scheduling time interval.

In addition, non-cyclic deterministic traffic types benefit. In general, the proposed scheme is applicable if the arrival of the frame is known or can be determined in advance.

By adjusting the scheduling of users associated with a respective one of the traffic flow on a sub-unit basis, for example on a minislots basis, the users are assigned to contiguous radio resource areas in time such that preferably entire slots are filled. This enables efficiently serving a portion of URLLC users through pre-reserved radio resource allocations, thus reducing the amount of preemption in the system. Under high URLLC demand, reduced preemption results in better resource utilization and better isolation between the different application classes.

By determining a plurality of scheduling opportunities via the transmission windows, the proposed scheme exploits the elasticity of cyclic traffic.

According to an advantageous example, the allocating of the plurality of radio resources comprises: determining a threshold for the scheduling time unit based on the plurality of scheduling demands associated with the different sub-units of the scheduling time unit; and allocating, on the sub-unit basis, at least one of the plurality radio resources exclusively for a transmission associated with one of the traffic flows if the scheduling demand of the respective sub-unit reaches at least the threshold.

By introducing the threshold valid for the whole scheduling time unit, the demand within the scheduling time unit can be distributed equally.

The aim is to distribute the minislots in such a way that the overall rate is increased. Excessive preemption may cause increased rate losses due to decoding errors and retransmissions, therefore in increased number of cyclic traffic users is served by reservation. Performance is increased when an increased number of mini-slots within a slot can be occupied, so there is a reduced rate loss. Otherwise, resources remain unused and reduce utilization efficiency.

According to an advantageous example, the allocating of the plurality of radio resources comprises: allocating at least a further one of the plurality radio resources preemptable for a transmission associated with a further one of the traffic flows based on the scheduling demand associated with the sub-unit above the threshold.

Advantageously, the decision whether the users are served via pre-emption or reservation is determined based on the threshold, which is valid for the scheduling time unit. Accordingly, a suitable share between reservation and preemption is determined.

To meet the high low latency requirements of URLLC applications with short TTIs, preemption is used. This, however, affects eMBB users, who suffer from an increased packet error rate, less if the proposed scheme is used. Therefore, an effective isolation between application classes can be achieved. In addition, less radio resources are consumed in order to recover the data packets with errors caused by preemption through retransmissions. This effect is particularly strong in industrial environments where deterministic URLLC applications can account for a large proportion of the total data traffic. The pre-emption is reduced, so that eMBB packets are transmitted with fewer errors.

According to a second aspect of the description, there is provided an apparatus of radio communications network according to claim 4.

According to an advantageous example, the allocating means for allocation of the plurality of radio resources comprises: determining means for determining a threshold for the scheduling time unit based on the plurality of scheduling demands associated with the different sub-units of the scheduling time unit; and allocating means for allocating, on the sub-unit basis, at least one of the plurality radio resources exclusively for a transmission associated with one of the traffic flows if the scheduling demand of the respective sub-unit reaches at least the threshold.

According to an advantageous example, the allocating means for allocation of the plurality of radio resources comprises: allocating means for allocating at least a further one of the plurality radio resources preemptable for a transmission associated with a further one of the traffic flows based on the scheduling demand associated with the sub-unit above the threshold.

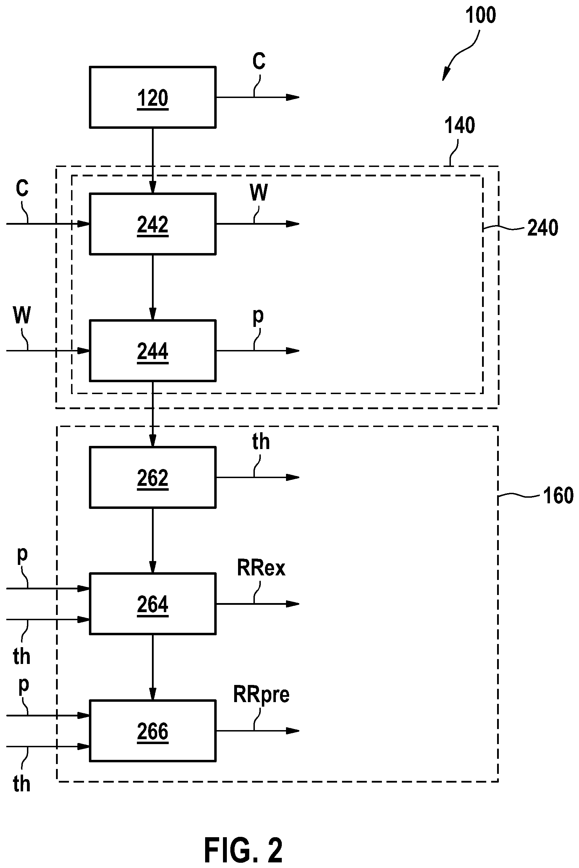

According to a third aspect, there is provided a method of using the apparatus according to the second aspect. In the following, the invention is best understood in view of Figure 2. The remaining embodiments, aspects, or examples are included in order to help the reader better understand the invention.

Figures 1 and 2     each depict a schematic flow chart;

Figure 3          depicts a schematic transmission window;

Figure 4          depicts a determined demand per sub-unit of a scheduling time unit;

Figure 5          depicts a schematic time-frequency grid; and

Figure 6          depicts schematically a radio communications network.

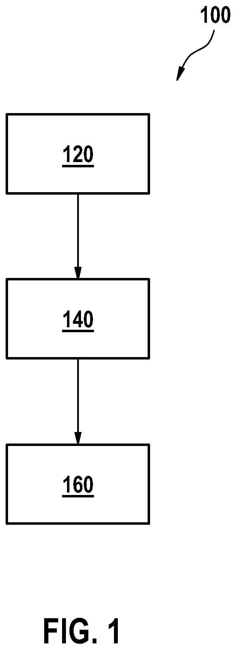

Figure 1 depicts a schematic flow chart for operating an apparatus 100.

Determining means or a processing module is configured for determine 120 and/or receiving a plurality of traffic characteristics characterizing different traffic flows comprising cyclic traffic flows and non-cyclic traffic flows. Determining means or a processing module are configured to determine 140 a scheduling demand for a scheduling time unit based on the received plurality of traffic characteristics. Allocating means or a processing module is configured to allocate 160 a plurality of radio resources within the scheduling time unit TA based on the determined scheduling demand.

In time-critical applications, cyclic data of a traffic flow is periodically exchanged between the components involved like a radio terminal. The communication cycle time is the duration between two similar data transmissions, e.g. the transmission of an actuator set point by a controller. The transmission between the components involved must take place within certain time windows. If a successful data transmission does not take place by the expected time, the communication layer appears to be disturbed from the point of view of the application. This results in a transmission window for the communication system, within which a data packet must be sent out.

Data packets are transmitted to or from the individual users by allocating resource blocks RBs via a time-frequency raster. An RB has a fixed size in the time and frequency domain. Several RBs are combined to form slots of different sizes - also called slots and minislots in the 5G context, each representing the different eMBB and URLLC TTIs.

To enable the coexistence of different classes of user requirements in the same radio communication system based on a common resource pool, different TTI lengths are used in SotA systems slots and minislots.

Figure 2 depicts a schematic flow diagram for operating the apparatus 100. The determining means for determining 140 the scheduling demand p comprises determining means or a processing module for determining 240, on a sub-unit basis, the scheduling demand p for a plurality of sub-units TB of the scheduling time unit TA based on the plurality of traffic characteristics C.

According to an example, the determining 240 comprises determining the demand of minislots in the current slot. This information is communicated implicitly or explicitly to the apparatus 100 by the corresponding application. Since we consider cyclic data traffic, the demand p can be derived from the cycle time, the offset and the packet size. For example, in the 5G standard the traffic characteristic C is part of the QoS information and is communicated to the RAN as Time-Sensitive Communication Assistance Information TSCAI.

The determining means for determining 140 the scheduling demand p comprises: determining means or a processing module for determining 242 a plurality of transmission windows W in dependence on the plurality of traffic characteristics C. The determining means or a processing module is configured to determine 244, on the sub-unit basis, the scheduling demand p for the plurality of sub-units TB based on the determined plurality of transmission windows W.

For example, a sum of a plurality of transmission windows per sub-unit results in a primary demand pattern of the scheduling time unit on the sub-unit basis. This primary demand pattern or the transmission windows can serve as a starting point for scheduling. Starting with the primary demand pattern, a scheduling unit to applies a uniform distribution of demands p within the scheduling time unit. In view of the subsequent reservation scheme, the determination of the scheduling demand includes a scheduling of the data transmissions in sub-units. Therefore, the demand p in each sub-unit represents the scheduled start of a transmission of deterministic data.

A respective one of the traffic characteristics C comprises an arrival time n_arrival, a data size, and a transmission deadline n_deadline, wherein a start of a respective one of the transmission windows W is the associated arrival time n_arrival, wherein an end of the respective one of the transmission windows W is based on the data size, and is based on the associated transmission deadline n_deadline.

The allocating means for allocation 160 of the plurality of radio resources RRex, RRpre comprises: determining means or a processing module for determining 262 a threshold th for the scheduling time unit TA based on the plurality of scheduling demands p associated with the different sub-units TB of the scheduling time unit TA; and allocating means or a processing module for allocating 264, on the sub-unit basis, at least one of the plurality radio resources RRex exclusively for a transmission associated with one of the traffic flows if the scheduling demand p of the respective sub-unit TB reaches at least the threshold - that means, if the respective scheduling demand p is at least above or equal to the threshold th.

The demand p is served at least partly by reserving exclusively sub-units or minislots within the scheduling time unit before the corresponding data packets are available at the transmitter. Advantageously, a scheduling is determined for the minislots within the respective scheduling time unit so that the deadlines of the traffic characteristics are met, and at the same time, the mini-slots are distributed efficiently.

According to an example, the minislots in the sense of the sub-units of a slot in the sense of the scheduling time unit are allocated within the specified limits, i.e. within their arrival time and deadline.

The allocating means for allocation 160 of the plurality of radio resources comprises: allocating means or a processing module for allocating 266, on the sub-unit basis, at least a further one of the plurality radio resources RRpre preemptable for a transmission associated with a further one of the traffic flows based on the scheduling demand p associated with the sub-unit TB above the threshold th.

The demand p is distributed within the scheduling time unit preferably uniformly. The scheduling time unit comprises N sub units, wherein a non-negative integer greater 1. The demand p per sub-unit is $p_n$. In order to achieve a probably uniform distribution of the demand p within the scheduling time unit, Jensen's Inequality according to equation (1) of a convex function F is equal, if the demand $p_n$ is identical for the sub-units of the scheduling time unit.

$$N \cdot F\left(\frac{\sum_{n=1}^{N} p_n}{N}\right) \leq \sum_{n=1}^{N} F(p_n) \qquad (1)$$

On the basis of equation (1), an optimization problem according to equations (2) and (3) is provided, wherein l = 1..L is the number of users of the class of the radio resource slice to be scheduled.

$$\min_{p} \sum_{n=1}^{N} F(p_n) = \min_{x} \sum_{n=1}^{N} F\left(\sum_l x_{n,l} \cdot z_l\right) \qquad (2)$$

$$s.t. \sum_{n=n_{l,arrival}}^{n_{l,deadline}} x_{n,l} = 1 \qquad (3)$$

The binary decision variable $x_{n,l}$ is one, if the user l in sub-unit n is transmitting with a (per-user) demand $z_l$, otherwise $x_{n,l}$ is zero. The convex function F forces the resource demand per sub-unit to be as equal as possible over the associated scheduling time unit. The constraint ensures the transmission of the cyclic data before the deadline.

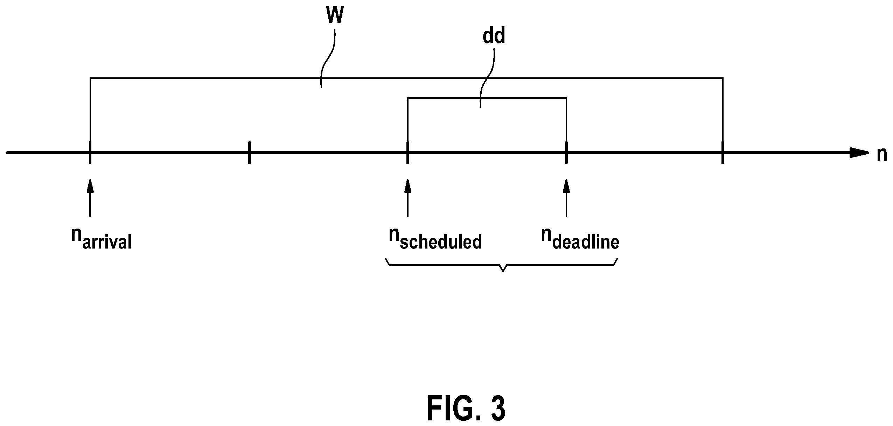

Figure 3 depicts an eligible transmission window W for transmitting deterministic data DD. Upon arrival of the deterministic data DD at an arrival time n_arrival, the deterministic data must be served within a known deadline n_deadline. In knowledge of the data size of the deterministic data DD and in knowledge of the deadline n_deadline, a scheduling time n_scheduled can be determined.

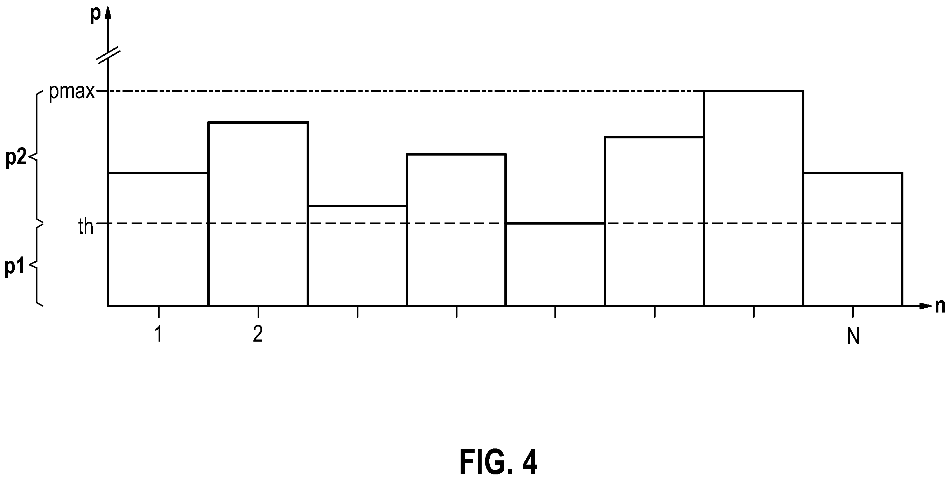

Figure 4 depicts schematically a demand p for a plurality of sub-units 1 to N. In order to guarantee QOS requirements of the users having access to the radio resource slice, exclusive reservation or pre-emption is conducted. Before the beginning of each scheduling time unit, the demand p is determined for the plurality of sub-units n. The demand p per using is characterized as the required share of the available bandwidth per user. In the present example, a maximum demand pmax is determined for sub-unit N-1. For sub-unit N-3 the minimum demand is used as the threshold th for the sub-units 1 to N of the scheduling time unit. For each sub-unit 1 to N, a demand p1 up to the threshold is the served via exclusive reservations for the associated traffic flows. For each sub-unit 1 to N, a demand p1 above the threshold th is served via preemptable radio resources for the associated traffic flows.

The threshold th is determined, for example, by a sharing coefficient between zero and one multiplied with the maximum demand pmax. Finding an optimal sharing coefficient has to take into consideration the availability of the resource share, which is divided into a reserved portion and a preemptable portion. The sharing coefficient is pre-determined. In another example, the sharing coefficient is determine online.

Depending on the demand p for sub-units within the scheduling time unit, the jitter tolerance n_deadline - n_arrival, or even if splitting a data packet to several sub-units is allowed, a nearly uniform distribution of the scheduled cyclic traffic can achieved.

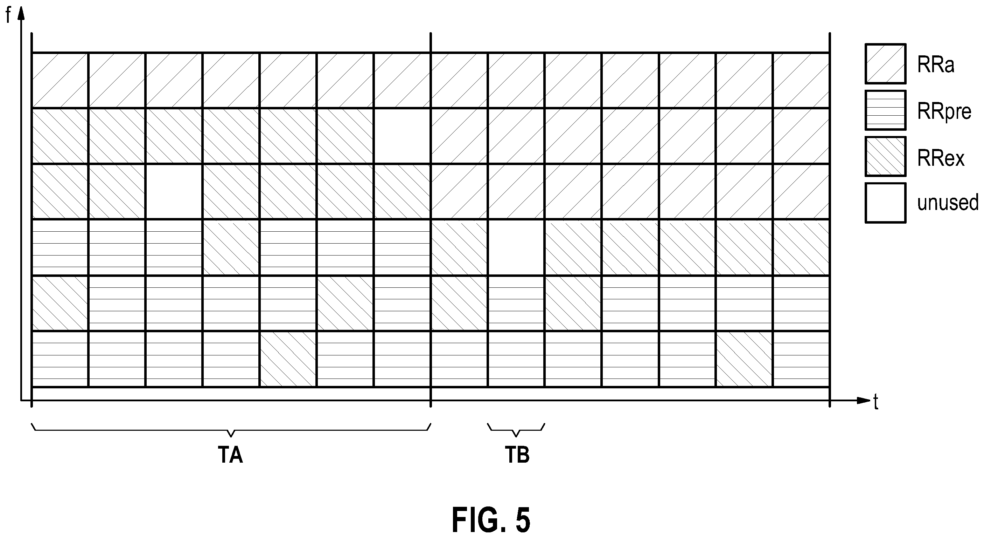

Figure 5 depicts a schematic frequency time grid. The scheduling time unit TA is divided into sub-units TB. A first plurality of radio resources RRa are scheduled for eMMB users. Exclusive reservation of the radio resources RRex is made for the demand at the respective sub-unit TB below the determined threshold of the associated scheduling time unit TA. Preemptive reservation of the radio resources RRpre is made for the demand between the threshold th and the maximum demand. The decision depends on the expected rate loss by preemption. This also depends on the ratio of eMBB to URLLC traffic, because increased eMBB traffic decreases the available radio resources for URLCC traffic. As a rule, the rate loss due to preemption is not expected to increase linearly but disproportionately as preemption increases. Thus, the decision is determined in each slot depending on this. In case of the determined demand being equal to the threshold th, a reservation of a full slot is made and any additional demand is served via preemption.

For example, the scheduling time unit TA represents a slot, and the sub-units n or TB of the scheduling time unit TA to represent a mini slot.

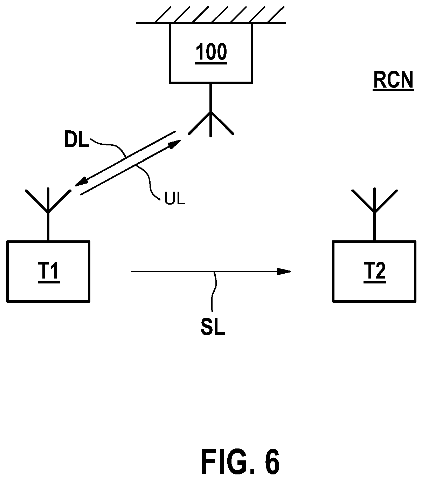

Figure 6 depicts a schematic radio communications network RCN comprising the apparatus 100 as a fixed access point serving two radio terminals T1 and T2. The apparatus 100 allocates the radio resources centrally and transmits the schedule indicating the scheduled radio resources in a downlink direction towards the radio terminals T1 and T2. In accordance with the received schedule, the terminal T1 uses the exclusively reserved radio resources or uses the preemptable radio resources on an uplink channel in an uplink direction UL or on a sidelink channel in a sidelink direction SL to transmit cyclic data pertaining to the respective cycling traffic flow.

**Claims**

1.  A method for operating an apparatus (100) of a radio communications network, RCN, the method comprising:

    determining (120) a plurality of traffic characteristics (C) characterizing different traffic flows, wherein at least one of the traffic characteristics (C) comprises an arrival time (n_arrival), a data size, and a transmission deadline (n_deadline);
    determining (140) a scheduling demand (p) for a scheduling time unit (TA) based on the received plurality of traffic characteristics (C), wherein the determining (140) of the scheduling demand (p) comprises:

    determining (242) a plurality of transmission windows (W) in dependence on the plurality of traffic characteristics (C), wherein a start of a respective one of the transmission windows (W) is the associated arrival time (n_arrival), wherein an end of the respective one of the transmission windows (W) is based on the data size, and is based on the associated transmission deadline (n_deadline), and
    determining (244) the scheduling demand (p) for the plurality of sub-units (TB) based on the determined plurality of transmission windows (W); and

    allocating (160) a plurality of radio resources (RRpre, RRex) within the scheduling time unit (TA) based on the determined scheduling demand (p).

2.  The method according to claim 1, wherein the allocating (160) of the plurality of radio resources (RRex, RRpre) comprises:

    determining (262) a threshold (th) for the scheduling time unit (TA) based on the plurality of scheduling demands (p) associated with the different sub-units (TB) of the scheduling time unit (TA); and
    allocating (264) at least one of the plurality radio resources (RRex) exclusively for a transmission associated with one of the traffic flows if the scheduling demand (p) of the respective sub-unit (TB) reaches at least the threshold (th).

3.  The method according to claim 2, wherein the allocating (160) of the plurality of radio resources comprises:

allocating (266) at least a further one of the plurality radio resources (RRpre) preemptable for a transmission associated with a further one of the traffic flows based on the scheduling demand (p) associated with the sub-unit (TB) above the threshold (th).

4. An apparatus (100) of a radio communications network, RCN, the apparatus (100) comprising:

determining means for determining (120) a plurality of traffic characteristics (C) characterizing different traffic flows, wherein at least one of the traffic characteristics (C) comprises an arrival time (n_arrival), a data size, and a transmission deadline (n_deadline);
determining means for determining (140) a scheduling demand (p) for a scheduling time unit (TA) based on the received plurality of traffic characteristics (C), wherein the determining means for determining (140) of the scheduling demand (p) comprises:

determining means for determining (242) a plurality of transmission windows (W) in dependence on the plurality of traffic characteristics (C), wherein a start of a respective one of the transmission windows (W) is the associated arrival time (n_arrival), wherein an end of the respective one of the transmission windows (W) is based on the data size, and is based on the associated transmission deadline (n_deadline); and determining means for determining (244) the scheduling demand (p) for the plurality of sub-units (TB) based on the determined plurality of transmission windows (W); and

allocating means for allocating (160) a plurality of radio resources (RRpre, RRex) within the scheduling time unit (TA) based on the determined scheduling demand (p).

5. The apparatus (100) according to claim 4, wherein the allocating means for allocation (160) of the plurality of radio resources (RRex, RRpre) comprises:

determining means for determining (262) a threshold (th) for the scheduling time unit (TA) based on the plurality of scheduling demands (p) associated with the different sub-units (TB) of the scheduling time unit (TA); and
allocating means for allocating (264) at least one of the plurality radio resources (RRex) exclusively for a transmission associated with one of the traffic flows if the scheduling demand (p) of the respective sub-unit (TB) reaches at least the threshold (th).

6. The apparatus (100) according to claim 5, wherein the allocating means for allocation (160) of the plurality of radio resources comprises:
allocating means for allocating (266) at least a further one of the plurality radio resources (RRpre) preemptable for a transmission associated with a further one of the traffic flows based on the scheduling demand (p) associated with the sub-unit (TB) above the threshold (th).

7. A method of using the apparatus (100) according to one of the claims 4 to 6.


**Patentansprüche**

1. Verfahren zum Betreiben einer Einrichtung (100) eines Funkkommunikationsnetzwerks, RCN, wobei das Verfahren Folgendes umfasst:

Bestimmen (120) einer Mehrzahl von Verkehrscharakteristiken (C), die unterschiedliche Verkehrsflüsse kennzeichnen, wobei mindestens eine der Verkehrscharakteristiken (C) eine Ankunftszeit (n_arrival), eine Datengröße und eine Übertragungsfrist (n_deadline) umfasst;
Bestimmen (140) einer Planungsanforderung (p) für eine Planungszeiteinheit (TA) basierend auf der empfangenen Mehrzahl von Verkehrscharakteristiken (C), wobei das Bestimmen (140) der Planungsanforderung (p) Folgendes umfasst:

Bestimmen (242) einer Mehrzahl von Übertragungsfenstern (W) in Abhängigkeit von der Mehrzahl von Verkehrscharakteristiken (C), wobei ein Start eines jeweiligen der Übertragungsfenster (W) die zugehörige Ankunftszeit (n_arrival) ist, wobei ein Ende des jeweiligen einen der Übertragungsfenster (W) auf der Datengröße basiert und auf der zugehörigen Übertragungsfrist (n_deadline) basiert, und
Bestimmen (244) der Planungsanforderung (p) für die Mehrzahl von Untereinheiten (TB) basierend auf der bestimmten Mehrzahl von Übertragungsfenstern (W); und
Zuweisen (160) einer Mehrzahl von Funkressourcen (RRpre, RRex) innerhalb der Planungszeiteinheit (TA) basierend auf der bestimmten Planungsanforderung (p).

2. Verfahren nach Anspruch 1, wobei das Zuweisen (160) der Mehrzahl von Funkressourcen (RRex, RRpre) Folgendes umfasst:

Bestimmen (262) eines Schwellenwertes (th) für die Planungszeiteinheit (TA) basierend auf der Mehrzahl von Planungsanforderungen (p), die mit den verschiedenen Untereinheiten (TB) der Planungszeiteinheit (TA) verknüpft sind; und
Zuweisen (264) mindestens einer der Mehrzahl von Funkressourcen (RRex) ausschließlich für eine Übertragung, die mit einem der Verkehrsflüsse verknüpft ist, falls die Planungsanforderung (p) der jeweiligen Untereinheit (TB) mindestens den Schwellenwert (th) erreicht.

3. Verfahren nach Anspruch 2, wobei das Zuweisen (160) der Mehrzahl von Funkressourcen Folgendes umfasst:
Zuweisen (266) mindestens einer weiteren der Mehrzahl von Funkressourcen (RRpre), die für eine Übertragung unterbrechbar ist, die mit einem weiteren der Verkehrsflüsse verknüpft ist, basierend darauf, dass die Planungsanforderung (p), die mit der Untereinheit (TB) verknüpft ist, über dem Schwellenwert (th) liegt.

4. Einrichtung (100) eines Funkkommunikationsnetzwerks, RCN, wobei die Einrichtung (100) Folgendes umfasst:

Bestimmungsmittel zum Bestimmen (120) einer Mehrzahl von Verkehrscharakteristiken (C), die unterschiedliche Verkehrsflüsse kennzeichnen, wobei mindestens eine der Verkehrscharakteristiken (C) eine Ankunftszeit (n_arrival), eine Datengröße und eine Übertragungsfrist (n_deadline) umfasst;
Bestimmungsmittel zum Bestimmen (140) einer Planungsanforderung (p) für eine Planungszeiteinheit (TA) basierend auf der empfangenen Mehrzahl von Verkehrscharakteristiken (C), wobei das Bestimmungsmittel zum Bestimmen (140) der Planungsanforderung (p) Folgendes umfasst:

Bestimmungsmittel zum Bestimmen (242) einer Mehrzahl von Übertragungsfenstern (W) in Abhängigkeit von der Mehrzahl von Verkehrscharakteristiken (C), wobei ein Start eines jeweiligen der Übertragungsfenster (W) die zugehörige Ankunftszeit (n_arrival) ist, wobei ein Ende des jeweiligen einen der Übertragungsfenster (W) auf der Datengröße basiert und auf der zugehörigen Übertragungsfrist (n_deadline) basiert; und
Bestimmungsmittel zum Bestimmen (244) der Planungsanforderung (p) für die Mehrzahl von Untereinheiten (TB) basierend auf der bestimmten Mehrzahl von Übertragungsfenstern (W); und
Zuweisungsmittel zum Zuweisen (160) einer Mehrzahl von Funkressourcen (RRpre, RRex) innerhalb der Planungszeiteinheit (TA) basierend auf der bestimmten Planungsanforderung (p).

5. Einrichtung (100) nach Anspruch 4, wobei das Zuweisungsmittel zum Zuweisen (160) der Mehrzahl von Funkressourcen (RRex, RRpre) Folgendes umfasst:

Bestimmungsmittel zum Bestimmen (262) eines Schwellenwertes (th) für die Planungszeiteinheit (TA) basierend auf der Mehrzahl von Planungsanforderungen (p), die mit den verschiedenen Untereinheiten (TB) der Planungszeiteinheit (TA) verknüpft sind; und
Zuweisungsmittel zum Zuweisen (264) mindestens einer der Mehrzahl von Funkressourcen (RRex) ausschließlich für eine Übertragung, die mit einem der Verkehrsflüsse verknüpft ist, falls die Planungsanforderung (p) der jeweiligen Untereinheit (TB) mindestens den Schwellenwert (th) erreicht.

6. Einrichtung (100) nach Anspruch 5, wobei das Zuweisungsmittel zum Zuweisen (160) der Mehrzahl von Funkressourcen Folgendes umfasst:
Zuweisungsmittel zum Zuweisen (266) mindestens einer weiteren der Mehrzahl von Funkressourcen (RRpre), die für eine Übertragung unterbrechbar ist, die mit einem weiteren der Verkehrsflüsse verknüpft ist, basierend darauf, dass die Planungsanforderung (p), die mit der Untereinheit (TB) verknüpft ist, über dem Schwellenwert (th) liegt.

7. Verfahren zum Verwenden der Einrichtung (100) nach einem der Ansprüche 4 bis 6.

**Revendications**

1. Procédé de fonctionnement d'un appareil (100) d'un réseau de communication radio, RCN, le procédé comprenant :

   la détermination (120) d'une pluralité de caractéristiques de trafic (C) caractérisant différents flux de trafic, dans lequel au moins une des caractéristiques de trafic (C) comprend un temps d'arrivée (n_arrival), une taille de données, et une échéance de transmission (n_deadline) ;
   la détermination (140) d'une demande d'ordonnancement (p) concernant une unité de temps d'ordonnancement (TA), sur la base de la pluralité reçue de caractéristiques de trafic (C), dans lequel la détermination (140) de la demande d'ordonnancement (p) comprend :

   la détermination (242) d'une pluralité de fenêtres de transmission (W) en fonction de la pluralité de caractéristiques de trafic (C), dans lequel un début d'une respective des fenêtres de transmission (W) est le temps d'arrivée associé (n_arrival), dans lequel une fin de l'une respective des fenêtres de transmission (W) est basée sur la taille de données, et est basée sur l'échéance de transmission associée (n_deadline), et
   la détermination (244) de la demande d'ordonnancement (p) concernant la pluralité de sous-unités (TB) sur la base de la pluralité déterminée de fenêtres de transmission (W) ; et
   l'attribution (160) d'une pluralité de ressources radio (RRpre, RRex) dans les limites de l'unité de temps d'ordonnancement (TA) sur la base de la demande d'ordonnancement déterminée (p).

2. Procédé selon la revendication 1, dans lequel l'attribution (160) de la pluralité de ressources radio (RRex, RRpre) comprend :

   la détermination (262) d'un seuil (th) pour l'unité de temps d'ordonnancement (TA) sur la base de la pluralité de demandes d'ordonnancement (p) associées aux différentes sous-unités (TB) de l'unité de temps d'ordonnancement (TA) ; et
   l'attribution (264) d'au moins une de la pluralité ressources radio (RRex) exclusivement pour une transmission associée à un des flux de trafic si la demande d'ordonnancement (p) de la sous-unité respective (TB) atteint au moins le seuil (th).

3. Procédé selon la revendication 2, dans lequel l'attribution (160) de la pluralité de ressources radio comprend :
   l'attribution (266) d'au moins une supplémentaire de la pluralité ressources radio (RRpre) pouvant être préemptées pour une transmission associée à un supplémentaire des flux de trafic sur la base de la demande d'ordonnancement (p) associée à la sous-unité (TB) supérieure au seuil (th).

4. Appareil (100) d'un réseau de communication radio, RCN, l'appareil (100) comprenant :

   des moyens de détermination pour la détermination (120) d'une pluralité de caractéristiques de trafic (C) caractérisant différents flux de trafic, dans lequel au moins une des caractéristiques de trafic (C) comprend un temps d'arrivée (n_arrival), une taille de données, et une échéance de transmission (n_deadline) ;
   des moyens de détermination pour la détermination (140) d'une demande d'ordonnancement (p) pour une unité de temps d'ordonnancement (TA) sur la base de la pluralité reçue de caractéristiques de trafic (C), dans lequel les moyens de détermination pour la détermination (140) de la demande d'ordonnancement (p) comprennent :

   des moyens de détermination pour la détermination (242) d'une pluralité de fenêtres de transmission (W) en fonction de la pluralité de caractéristiques de trafic (C), dans lequel un début d'une respective des fenêtres de transmission (W) est le temps d'arrivée associé (n_arrival), dans lequel une fin de l'une respective des fenêtres de transmission (W) est basée sur la taille de données, et est basée sur l'échéance de transmission associée (n_deadline) ; et
   des moyens de détermination pour la détermination (244) de la demande d'ordonnancement (p) pour la pluralité de sous-unités (TB) sur la base de la pluralité déterminée de fenêtres de transmission (W) ; et
   des moyens d'attribution pour l'attribution (160) d'une pluralité de ressources radio (RRpre, RRex) dans les limites de l'unité de temps d'ordonnancement (TA) sur la base de la demande d'ordonnancement déterminée (p).

5. Appareil (100) selon la revendication 4, dans lequel les moyens d'attribution pour l'attribution (160) de la pluralité de ressources radio (RRex, RRpre) comprennent :

des moyens de détermination pour la détermination (262) d'un seuil (th) pour l'unité de temps d'ordonnancement (TA) sur la base de la pluralité de demandes d'ordonnancement (p) associées aux différentes sous-unités (TB) de l'unité de temps d'ordonnancement (TA) ; et

des moyens d'attribution pour l'attribution (264) d'au moins une de la pluralité ressources radio (RRex) exclusivement pour une transmission associée à un des flux de trafic si la demande d'ordonnancement (p) de la sous-unité respective (TB) atteint au moins le seuil (th).

6. Appareil (100) selon la revendication 5, dans lequel les moyens d'attribution pour l'attribution (160) de la pluralité de ressources radio comprennent :

des moyens d'attribution pour l'attribution (266) d'au moins une supplémentaire de la pluralité ressources radio (RRpre) pouvant être préemptées pour une transmission associée à un supplémentaire des flux de trafic sur la base de la demande d'ordonnancement (p) associée à la sous-unité (TB) supérieure au seuil (th).

7. Procédé d'utilisation de l'appareil (100) selon l'une des revendications 4 à 6.

100

120

140

160

FIG. 1

**FIG. 2**

FIG. 3

**FIG. 4**

FIG. 5

FIG. 6

**EP 3 962 218 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20200011245 A